# EUROPEAN PATENT APPLICATION

(11) **EP 2 565 975 A2**
(43) Date of publication of application: **06.03.2013**
(21) Application number: 12182129.2
(22) Date of filing: 29.08.2012
(51) Int. Cl.: H01M 10/44, H01M 10/48, H02J 7/02, B60L 11/18

(54) **Battery monitoring and charging system and motor-driven vehicle**

(30) Priority: 05.09.2011 JP 2011192445
(71) Applicant: Kabushiki Kaisha Toyota Jidoshokki, Kariya-shi, Aichi 448-8671 (JP)
(72) Inventor: Kuraishi, Mamoru, Kariya-shi, Aichi 448-8671 (JP); Inuzuka, Hiroyuki, Kariya-shi,, Aichi 448-8671 (JP); Miyata, Hachiro, Kariya-shi, Aichi 448-8671 (JP)
(74) Representative: TBK

(57) **Abstract**

A battery monitoring and charging system includes a charging equipment and a motor-driven vehicle. The motor-driven vehicle includes a battery, a charger that charges the battery by power supplied from the charging equipment, a charging control device that controls operations of the charger, a communication device that communicates with the charging equipment, a voltage detecting device that monitors voltage of the battery and an activation control device that generates a first control signal if the monitored voltage falls below a threshold value when the charging control device is in off state. When the activation control device generates the first control signal, the charging control device is activated, generating to the charging equipment through the communication device a second control signal that is indicative of a need that the charging equipment should supply power to the motor-driven vehicle and causing the charger to start operation of the charger.

## Description

### BACKGROUND OF THE INVENTION

The present invention relates to a battery monitoring and charging system in which a motor-driven vehicle and a charging equipment cooperate to monitor and charge a battery mounted on the motor-driven vehicle and also to a motor-driven vehicle used for the battery monitoring and charging system.

A high-voltage battery that is composed of a plurality of rechargeable battery cells connected to each other in series has been put into practical use. This kind of battery has been drawing attention as a battery that is mounted on a motor-driven vehicle such as a hybrid vehicle using an engine in combination with a motor and an electric vehicle.

In charging the battery, the battery needs to be monitored so as to prevent the battery from deteriorating due to overcharge. This technology is disclosed, for example, in Japanese Patent Application Publications 2006-217757 and 2007-209168.

Furthermore, this kind of battery deteriorates rapidly when it is over-discharged due to self-discharge caused when the battery is left unused for a long time.

The present invention is directed to a battery monitoring and charging system in which a motor-driven vehicle and a charging equipment cooperate to monitor and charge a battery so as to prevent the battery from being over-discharged.

### SUMMARY OF THE INVENTION

A battery monitoring and charging system includes a charging equipment and a motor-driven vehicle. The motor-driven vehicle includes a battery, a charger that charges the battery by power supplied from the charging equipment, a charging control device that controls operations of the charger, a communication device that communicates with the charging equipment, a voltage detecting device that monitors voltage of the battery and an activation control device that generates a first control signal if the monitored voltage falls below a threshold value when the charging control device is in off state. When the activation control device generates the first control signal, the charging control device is activated, generating to the charging equipment through the communication device a second control signal that is indicative of a need that the charging equipment should supply power to the motor-driven vehicle and causing the charger to start operation of the charger.

Other aspects and advantages of the invention will become apparent from the following description, taken in conjunction with the accompanying drawings, illustrating by way of example the principles of the invention.

### BRIEF DESCRIPTION OF THE DRAWINGS

The features of the present invention that are believed to be novel are set forth with particularity in the appended claims. The invention together with objects and advantages thereof, may best be understood by reference to the following description of the presently preferred embodiments together with the accompanying drawings in which:
FIG. 1 is a schematic configuration diagram showing a battery monitoring and charging system according to a preferred embodiment of the present invention;
FIG. 2 is an example of a battery monitoring and cell balance circuit of the battery monitoring and charging system of FIG. 1;
FIG. 3 is a flowchart showing the operation of a battery ECU of the battery monitoring and charging system of FIG. 1;
FIG. 4 is a timing chart illustrating the relation among an ignition signal IG, a cell balance on and off timing, voltage of each battery cell, a threshold value Vth, a first control signal Scw and a second control signal Secw; and
FIG. 5 shows another example of a battery monitoring and cell balance circuit of the battery monitoring and charging system of FIG. 1.

### DETAILED DESCRIPTION OF THE PREFERRED EMBODIMENT

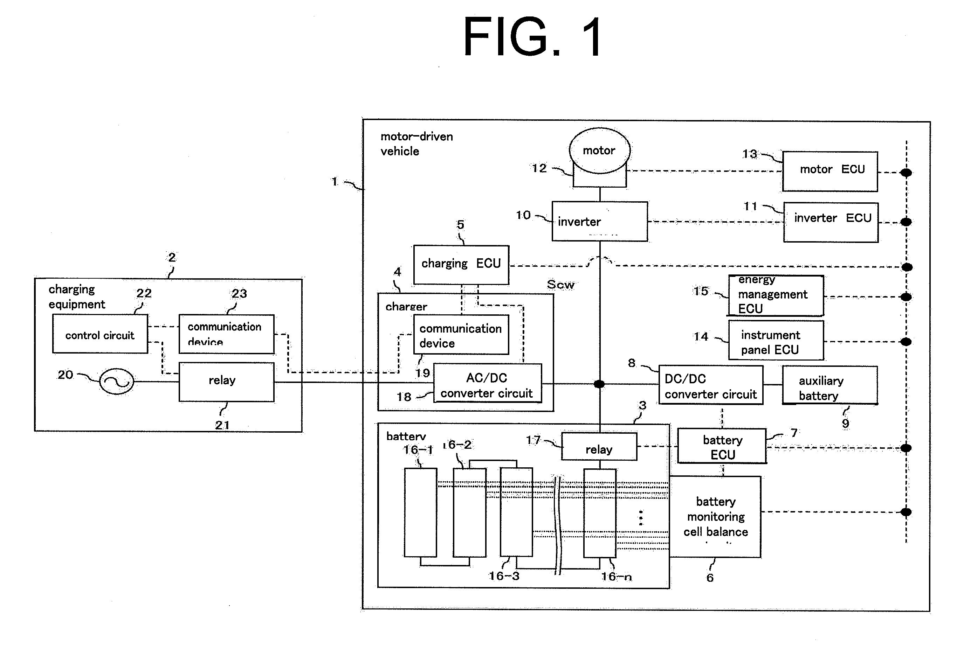

Referring to FIG. 1 showing in schematic configuration diagram the battery monitoring and charging system according to the preferred embodiment of the present invention, the battery monitoring and charging system includes a motor-driven vehicle 1, charging equipment 2 and a battery 3 mounted on the motor-driven vehicle 1. The motor-driven vehicle 1 and the charging equipment 2 cooperate to monitor and charge the battery 3. The motor-driven vehicle 1 includes a hybrid vehicle that uses an engine in combination with a motor, a plug-in hybrid vehicle, an electric vehicle and an electric forklift truck. The charging equipment 2 may be a charging station installed in commercial facilities or a household charger installed for a house.

The motor-driven vehicle 1 includes the aforementioned battery 3, a charger 4, a charging ECU (or electric control unit) 5 that serves as the charging control device of the present invention, a battery monitoring and cell balance circuit 6 that serves as the voltage detecting device and also as the cell balancing device of the present invention, a battery ECU 7 that serves as the activation control device of the present invention, a DC/DC converter circuit 8, an auxiliary battery 9, an inverter circuit 10, an inverter ECU 11, a motor 12, a motor ECU 13, an instrument panel ECU 14 and an energy management ECU 15. The battery monitoring and cell balance circuit 6 and the battery ECU 7 may be configured to cooperate to form an integrated battery-monitoring unit.

The battery 3 includes a plurality of rechargeable battery cells 16-1 through 16-n, such as a lithium-ion secondary battery or a nickel hydride battery, and a relay 17. The battery cells 16-1 through 16-n are connected with each other in series. The number of battery cells is, for example, between dozens and hundreds. When the relay 17 is turned on, the battery 3 supplies DC power to the DC/DC converter circuit 8 and the inverter circuit 10 through the relay 17.

The charger 4 includes an AC/DC converter circuit 18 and a communication device 19. The AC/DC converter circuit 18 converts AC power supplied from the charging equipment 2 through a cable into DC power that is used for charging the battery 3.

The communication device 19 performs power line communication with the charging equipment 2 through the charging cable. The communication device 19 may perform wireless communication with the charging equipment 2. In this case, the battery 3 may be charged by a wireless charging system of, e.g., an electromagnetic induction type. The communication device 19 may be provided outside the charger 4.

The charging ECU 5 is composed of, e.g., a microcomputer and a memory and operable to control the operations of the charger 4. The battery monitoring and cell balance circuit 6 monitors the voltage of the battery 3 in such a way as to monitor the voltages of the battery cells 16-1 through 16-n individually. The battery monitoring and cell balance circuit 6 also balances the voltages.

The battery ECU 7 is composed of, e.g., a microcomputer and a memory, and operable to control the on/off operation of the relay 17 and the operation of the battery monitoring and cell balance circuit 6 and of the DC/DC converter circuit 8.

When the ECUs other than the battery ECU 7, and the respective circuits are in their off state, e.g., due to a stopped state of the motor-driven vehicle 1 (or when no power is supplied to the ECUs such as the charging ECU 5, the inverter ECU 11, the motor ECU 13, the instrument panel ECU 14 and the energy management ECU 15 and to the circuits such as the charger 4, the DC/DC converter 8 and the inverter circuit 10), the battery ECU 7 generates a first control signal Scw through CAN (Controller Area Network) communication if at least one of the voltages V1 through Vn falls below a threshold value Vth (or the voltage of the battery cell that is just before the battery cell becomes overdischarged). Accordingly, the charging ECU 5 is activated, generating to the charging equipment 2 through the communication device 19 a second control signal Secw that is indicative of a need that the charging equipment 2 should supply power to the motor-driven vehicle 1 and causing the charger 4 to start its operation.

The charging equipment 2 includes a commercial power source 20, a relay 21, a control circuit 22 and a communication device 23 communicable with the communication device 19 through power line communication or wireless communication. When the communication device 23 of the charging equipment 2 receives the second control signal Secw, the control circuit 22 of the charging equipment 2 is activated. If the charging equipment 2 is ready to supply power to the motor-driven vehicle 1, the control circuit 22 turns on the relay 21 of the charging equipment 2 and causes the charging equipment 2 to supply power to the motor-driven vehicle 1. If the control circuit 22 is activated before the second control signal Secw is generated to the charging equipment 2, the control circuit 22 determines whether the charging equipment 2 is ready to supply power to the motor-driven vehicle 1 as soon as the charging equipment 2 receives the second control signal Secw. If Yes, or if the charging equipment 2 is ready to supply power to the motor-driven vehicle 1, the control circuits 22 turns on the relay 21 and the charging equipment 2 starts supplying power to the motor-driven vehicle 1.

The DC/DC converter 8 decreases the voltage of DC power supplied from the battery 3 and the auxiliary battery 9 is charged by DC power of such decreased voltage.

The auxiliary battery 9 may be of, e.g., lead storage battery and supplies power to electric equipment such as an air conditioner and a navigation system that are mounted on the motor-driven vehicle 1.

The inverter circuit 10 converts DC power supplied from the battery 3 into 3-phase AC power that is used for driving the motor 12.

The inverter ECU 11 is composed of, e.g., a microcomputer and a memory and operable to control the operations of the inverter circuit 10 based on signals that are transmitted from the energy management ECU 15 through CAN communication and indicative of the desired rotating speed and torque of the motor 12.

The motor 12 is used as the traction motor for driving the motor-driven vehicle 1 or for assisting a gasoline engine mounted on the motor-driven vehicle 1.

The motor ECU 13 is composed of, e.g., a microcomputer and a memory and operable to transmit signals indicative of the rotating speed of the motor 12, etc. to the energy management ECU 15, etc. through CAN communication.

The instrument panel ECU 14 is composed of, e.g., a microcomputer and a memory and operable to transmit to the charging ECU 5 and the energy management ECU 15 through CAN communication an ignition signal IG that is indicative of whether or not an ignition button provided on the instrument panel of the motor-driven vehicle 1 is pushed by the vehicle driver. In the present embodiment, if the ignition button is pushed by the driver, e.g., while the motor-driven vehicle 1 is parked, the ignition signal IG is turned from low level to high level, so that the ECUs and the circuits are deenergized. If the driver pushes the ignition button again while the motor-driven vehicle 1 is parked, the ignition signal IG is turned from high level to low level, so that the ECUs other than the battery ECU 7 and the circuits are deenergized.

The energy management ECU 15 is composed of, e.g., a microcomputer and a memory and operable to calculate the desired rotating speed and torque of the motor 12 based on the current rotating speed of the motor 12 and the position of accelerator pedal operated by the driver and also to control the operations of the respective ECUs based on the energy of the motor 12 for driving the vehicle, the energy regenerated by the motor 12 and the current energy of the battery 3 that is available to be supplied.

The following will describe the communication between the motor-driven vehicle 1 and the charging equipment 2. The motor-driven vehicle 1 and the charging equipment 2 are connected with each other by the cable. When the motor-driven vehicle 1 is ready to be charged, i.e. when a pilot signal that is controlled by the motor-driven vehicle 1 and also sent through the cable shows that the motor-driven vehicle is ready to be charged, the control circuit 22 turns on the relay 21 thereby to cause AC power from the commercial power source 20 to be supplied to the motor-driven vehicle 1 through the cable. When a pilot signal controlled by the motor-driven vehicle 1 and indicative of charging of the motor-driven vehicle 1 being finished, the control circuit 22 turns off the relay 21 thereby to cause the supply of AC power to the motor-driven vehicle 1 to be stopped.

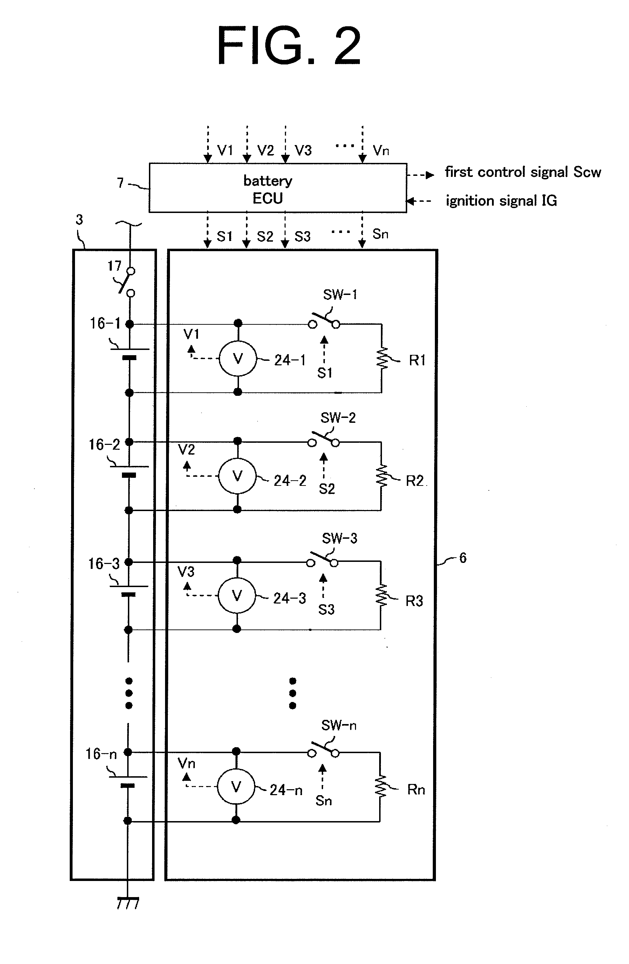

Referring to FIG. 2 showing an example of a battery monitoring and cell balance circuit 6 of the battery monitoring and charging system according to the embodiment, the battery 3 shown in the drawing includes the battery cells 16-1 through 16-n connected with each other in series as already described with reference to FIG. 1. The negative terminal of the battery 3 is connected to a virtual ground of the motor-driven vehicle 1. The battery monitoring and cell balance circuit 6 may be built in the battery 3.

The battery monitoring and cell balance circuit 6 further includes voltage sensors 24-1 through 24-n, resistors R1 through Rn and switches SW-1 through SW-n.

The voltage sensors 24-1 through 24-n are connected at the opposite ends thereof to the positive and negative terminals of the respective battery cells 16-1 through 16-n and are operable to detect the voltages V1 through Vn of the battery cells 16-1 through 16-n, respectively.

The switch SW-1 is connected at one end thereof to one end of the resistor R1 and at the other end thereof to the positive terminal of the battery cell 16-1. The resistor R1 is connected at the other end thereof to the negative terminal of the battery cell 16-1. The same is true of the rest of the switches SW-2 through SW-n, the resistors R2 through Rn and the battery cells 16-2 through 16-n.

When the ignition signal IG remains at low level, the battery ECU 7 controls the battery monitoring and cell balance circuit 6 so as to equalize or balance the voltages of the battery cells 16-1 through 16-n.

For example, the battery ECU 7 makes comparison of voltages V1 through Vn detected by the respective voltage sensors 24-1 through 24-n, determines the lowest voltage (hereinafter referred to as Vmin) and performs on and off control for the switches SW-1 through SW-n by control signals S1 through Sn, respectively, so as to make all the voltages V1 through Vn to Vmin. For example, if the voltage V1 of the battery cell 16-1 is higher than Vmin, the battery ECU 7 allows the battery cell 16-1 to discharge so as to decrease the voltage V1 of the battery cell 16-1 to Vmin by turning the switch SW-1 on and off repeatedly. In this case, energy discharged from the battery cell 16-1 is consumed by the resistor R1. Thus, performing the above operation for the battery cells 16-1 through 16-n, the voltages V1 through Vn of the battery cells 16-1 through 16-n are balanced to Vmin.

The voltage sensors 24-1 through 24-n as the voltage detecting device for detecting voltages V1 through Vn and the resistors R1 through Rn and the switches SW-1 through SW-n both serving as the cell balancing device for equalizing the voltages of the battery cells may be provided separately in the motor-driven vehicle 1.

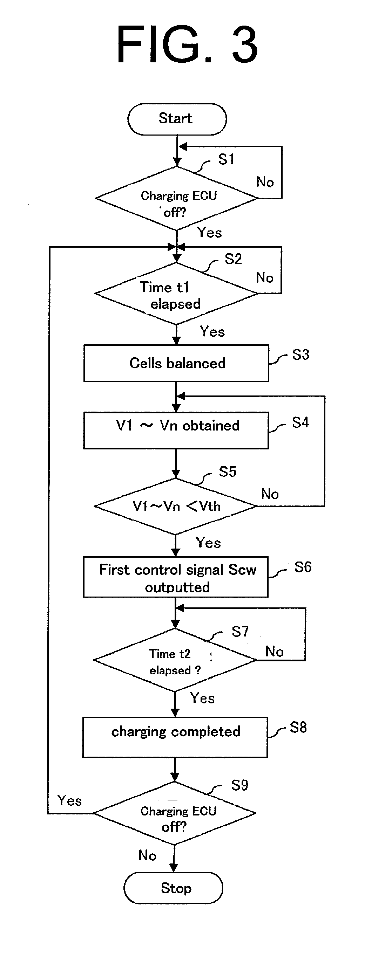

FIG. 3 is a flowchart showing the operation of the battery ECU 7 of the battery monitoring and charging system according to the present embodiment.

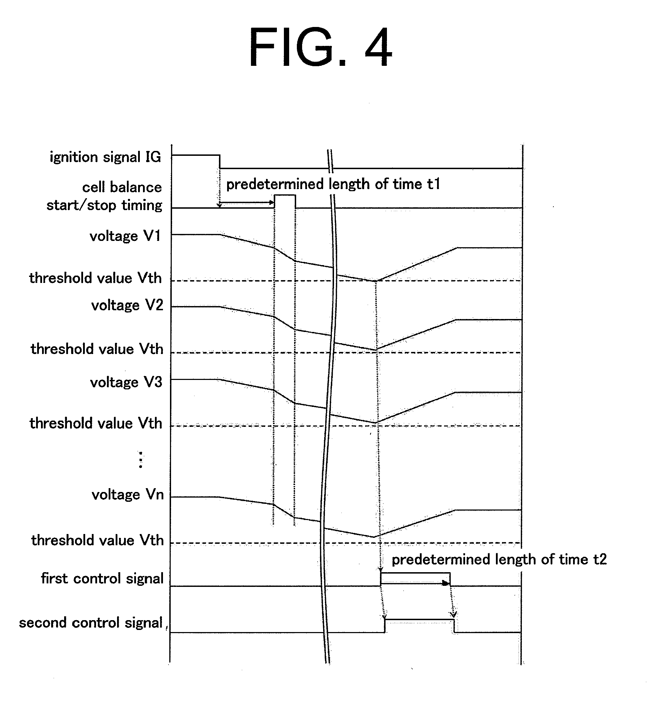

If the charging ECU 5 is turned off (or if Yes in step S1) and also if a predetermined length of time t1 (or a half to one hour) has elapsed (or if Yes in step S2) after step 1, the battery ECU 7 causes the battery monitoring and cell balance circuit 6 to balance the voltages of the battery cells 16-1 through 16-n (step S3). For example, when the ignition signal IG is turned from high level to low level, as shown in FIG. 4, the above cell balancing operation begins after the above predetermined length of time t1 has elapsed.

When the cell balancing operation is finished, the battery ECU 7 receives signals indicative of the voltages V1 through Vn detected by the voltage sensors 24-1 through 24-n (step S4) and determines whether or not any one of the voltages V1 through Vn falls below the threshold value Vth (step S5).

If the battery ECU 7 determines that none of the voltages V1 through Vn falls below the threshold value Vth (or if No in step S5), the steps S4 and S5 are repeated. If the battery ECU 7 determines that any one of the voltages V1 through Vn falls below the threshold value Vth (or if Yes in step S5), the first control signal Scw is outputted by the battery ECU 7 (step S6). For example, if the voltage V1 falls below the threshold value Vth, as shown in FIG. 4, the first control signal Scw is turned from low level to high level.

When the first control signal Scw is turned from low level to high level while the ignition signal IG is at low level, the charging ECU 5 is started spontaneously and causes the communication device 19 to transmit to the charging equipment 2 through the communication device 19 a second control signal Secw that is indicative of a need that the charging equipment 2 should supply power to the motor-driven vehicle 1. For example, when the first control signal Scw is turned from low level to high level while the ignition signal IG is at low level, as shown in FIG. 4, the charging ECU 5 makes the second control signal Secw change from low level to high level. The charging ECU 5 also starts to control the operations of the charger 4. When the charging equipment 2 supplies power to the motor-driven vehicle 1 through the cable after a pilot signal indicative of that the motor-driven vehicle being ready to be charged is outputted to the charging equipment 2, the charging ECU 5 causes the charger 4 to charge the battery 3.

When the communication device 23 receives a high-level second control signal Secw, the control circuit 22 of the charging equipment 2 is started spontaneously. If the control circuit 22 determines from a pilot signal that the motor-driven vehicle is ready to be charged, the control circuit 22 turns on the relay 21 and causes the charging equipment 2 to supply power from the commercial power source 20 to the motor-driven vehicle 1 through the cable.

If a predetermined length of time t2 has elapsed after the output of the first control signal Scw (or if Yes in step 7), the battery ECU 7 stops charging the battery 3 (step S8). For example, when the predetermined length of time t2 has elapsed after the output of the first control signal Scw, the battery ECU 7 makes the first control signal Scw to be low level, as shown in FIG. 4. When the first control signal Scw is turned to low level, the charging ECU 5 makes the second control signal Secw to be low level and causes charging the battery 3 to be stopped, outputting a pilot signal indicative of the completion of the charging operation. The amount of charge (or SOC (State Of Charge)),varies depending on the voltage of the battery cell and the environmental temperature. The time required for the battery cell to reach the full-charged state may be stored in the battery ECU as the data of the aforementioned predetermined length of time t2 for each type of the battery cell.

If the battery ECU 7 determines that the charging ECU 5 remains off, or the ignition signal IG remains at low level (or if Yes in step S9), the battery ECU 7 causes the steps S2 through S9 to be repeated as the battery monitoring and charging process. If the battery ECU 7 determines that the charging ECU 5 starts to drive, or the ignition signal IG is turned to be high level (or if No in step 9), the battery ECU 7 stops the battery monitoring and charging operation.

In the battery monitoring and charging system according to the embodiment, if any one of the voltages V1 through Vn of the battery cells 16-1 through 16-n falls below the threshold value Vth when the ignition signal IG remains at low level, the start-up of the charging ECU 5 is started spontaneously, which is followed by spontaneous start-up of the control circuit 22 of the charging equipment 2, so that charging the battery 3 is initiated. Therefore, the battery monitoring and charging system can prevent the battery 3 from being over-discharged by self-discharge due to the motor-driven vehicle being left unused for a long time, with the result that the deterioration of the battery 3 is forestalled.

In the embodiment, the battery monitoring and cell balance circuit 6 is configured so that each of the battery cells 16-1 through 16-n is discharged in such a way that the voltages V1 through Vn of the battery cells 16-1 through 16-n correspond to the lowest voltage of the voltages V1 through Vn. However, the battery cells 16-1 through 16-n may be charged or discharged in such a way that the voltages V1 through Vn of the battery cells 16-1 through 16-n correspond to the mean voltage of the voltages V1 through Vn.

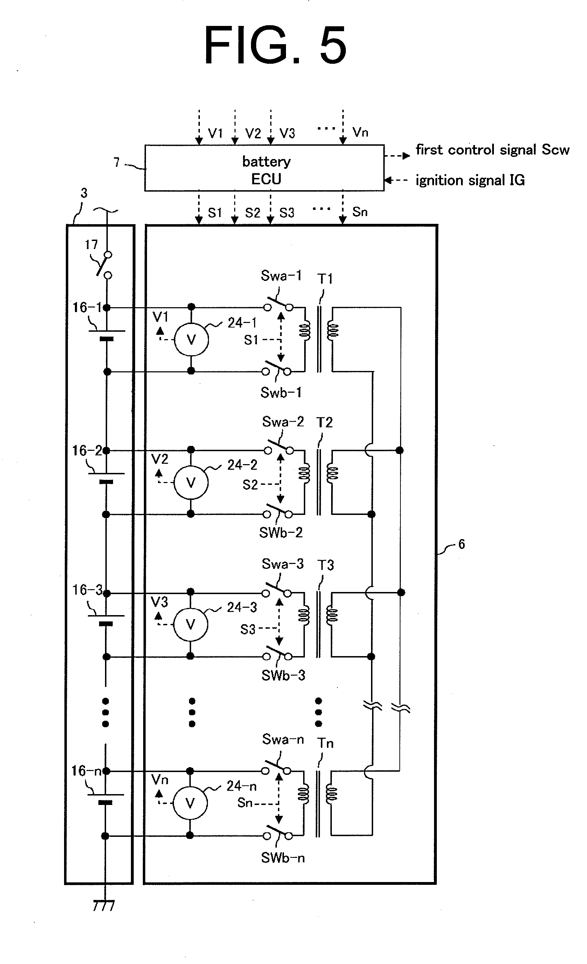

FIG. 5 shows another example of the battery monitoring and cell balance circuit of the battery monitoring and charging system of the present invention. The same reference numerals denote the same or similar components to the embodiment shown in FIG. 2, and the description of such components will be omitted. The battery monitoring and cell balance circuit 6 shown in FIG. 5 includes the voltage sensors 24-1 through 24-n, transformers T1 through Tn and switches SWa-1 through SWa-n and SWb-1 through SWb-n. The switches SWa-1 and SWb-1 turns on and off simultaneously. The same is true of the other paired switches SWa-2 through SWa-n and SWb2 through SWb-n.

T1 designates a transformer and the primary coil of the transformer T1 is connected in parallel to the battery cell 16-1. The switch SWa-1 is provided between one end of the primary coil of the transformer T1 and the positive terminal of the battery cell 16-1 and the switch SWb-1 is provided between the other end of the primary coil of the transformer T1 and the negative terminal of the battery cell 16-1. The same is true of the other transformers T2 through Tn, switches SWa-2 through SWa-n and switches SWb-2 through SWb-n. The secondary coils of the transformers T1 through Tn are connected in parallel with each other.

The battery ECU 7 controls the on and off operation of the switches SWa-1 through SWa-n and the switches SWb-1 through SWb-n in such a way that the battery ECU 7 allows any selected battery cell to be discharged and simultaneously allows the other battery cell to be charged during the cell balancing operation.

For example, when the voltage V1 of the battery cell 16-1 is higher than the voltage V2 of the battery cell 16-2, the battery ECU 7 causes the switch SWa-1 and the switch SWb-1 to be turned on and off repeatedly and simultaneously keeps the switch SWa-2 and the switch SWb-2 to be on. By this operation, AC current flows from the battery cell 16-1 to the primary coil of the transformer T1, so that the transformers T1 and T2 are electromagnetically coupled and the voltage across the primary coil of the transformer T2 becomes higher than the voltage V2 of the battery cell 16-2. Consequently, an electric current flows from the transformer T2 to the battery cell 16-2 thereby to charge the battery cell 16-2. Repeating charging and discharging the battery cells 16-1 through 16-n balances the voltages V1 through Vn to the mean voltage of the voltages V1 through Vn.

For another example, the battery ECU 7 causes the switches SWa-1 through SWa-n and the switches SWb-1 through SWb-n to repeat the on and off operation simultaneously during the cell balancing operation. AC current flows to the primary coil of each of the transformers T1 through Tn, so that the transformers T1 through Tn are electromagnetically coupled. In this case, the mean voltage of the voltages V1 through Vn is applied to the primary coils of the respective transformers T1 through Tn. If the mean voltage is lower than the voltage of the battery cell, electric current flows from the battery cell to the transformer thereby to discharge the battery cell and if the mean voltage is higher than the voltage of the battery cell, electric current flows from the transformer to the battery cell thereby to charge the battery cell, with the result that the voltages V1 through Vn can be balanced.

In the embodiment of FIG. 2, AC power supplied from the charging equipment 2 is converted into DC power in the charger 4, so that the battery 3 is charged by the DC power. However, AC power supplied from the commercial power source 20 may be converted into DC power in the charging equipment 2 and the DC power may be converted in the charger 4 of the motor-driven vehicle 1 into power for charging the battery 3.

In the embodiment of FIG. 2, the cell balancing operation is performed when the predetermined time t1 has elapsed after the charging ECU 5 is turned off. According to the present invention, however, the cell balancing operation may be performed when the difference between the highest voltage and the lowest voltage of the voltages V1 through Vn becomes more than a threshold value.

In the embodiment, the battery monitoring and charging process is performed after the charging ECU 5 is turned off and the cell balancing operation is completed. However, the battery monitoring and charging process may be performed after the charging ECU 5 is turned off without performing the cell balancing operation.

In the embodiment, the voltages V1 through Vn of the battery cells 16-1 through 16-n are detected in the battery monitoring and cell balance circuit 6 and the first control signal Scw is outputted by the battery ECU 7 when any one of the voltages V1 through Vn falls below the threshold value Vth. However, a total voltage of the battery 3 may be detected in the battery monitoring and cell balance circuit 6 and the first control signal Scw may be outputted by the battery ECU 7 when the total voltage of the battery 3 falls below a threshold value Vtha (e.g., the total voltage of the battery 3 before the battery 3 becomes over-discharge).

A battery monitoring and charging system includes a charging equipment and a motor-driven vehicle. The motor-driven vehicle includes a battery, a charger that charges the battery by power supplied from the charging equipment, a charging control device that controls operations of the charger, a communication device that communicates with the charging equipment, a voltage detecting device that monitors voltage of the battery and an activation control device that generates a first control signal if the monitored voltage falls below a threshold value when the charging control device is in off state. When the activation control device generates the first control signal, the charging control device is activated, generating to the charging equipment through the communication device a second control signal that is indicative of a need that the charging equipment should supply power to the motor-driven vehicle and causing the charger to start operation of the charger.

## Claims

1. A battery monitoring and charging system comprising:
a charging equipment (2); and
a motor-driven vehicle (1), the motor-driven vehicle including:
a battery (3);
a charger (4) that charges the battery (3) by power supplied from the charging equipment (2):
a charging control device (5) that is operable to control operations of the charger (4);
a communication device (19) that communicates with the charging equipment (2);
a voltage detecting device (6) that monitors voltage of the battery (3); and
an activation control device (7) that generates a first control signal (Scw) if the monitored voltage falls below a threshold value (Vth) when the charging control device (5) is in off state, **characterized in that** when the activation control device (7) generates the first control signal (Scw), the charging control device (5) is activated, generating to the charging equipment (2) through the communication device (19) a second control signal (Secw) that is indicative of a need that the charging equipment (2) should supply power to the motor-driven vehicle (1) and causing the charger (4) to start operation of the charger (4).

2. The battery monitoring and charging system according to claim 1, wherein the battery (3) includes a plurality of battery cells (16-1 through 16-n) that are connected with each other in series, **characterized in that** the voltage detecting device (6) monitors the voltage of the battery (3) in such a way as to monitor voltages (V1 through Vn) of the battery cells (16-1 through 16-n) individually, wherein the activation control device (7) generates the first control signal (Scw) if at least one of the voltages (V1 through Vn) of the battery cells (16-1 through 16-n) falls below a threshold value (Vth) when the charging control device (5) is in off state.

3. The battery monitoring and charging system according to claim 2, **characterized in that** the motor-driven vehicle (1) further includes a cell balancing device (6) that equalizes the voltages (V1 through Vn) of the battery cells (16-1 through 16-n).

4. A motor-driven vehicle (1) comprising:
a battery (3):
a charger (4) that charges the battery (3) by power supplied from a charging equipment (2) that is located outside the motor-driven vehicle (1):
a charging control device (5) that controls operations of the charger (4);
a communication device (19) that communicates with charging equipment (2);
a voltage detecting device (6) that monitors voltage of the battery (3); and
an activation control device (7) that generates a first control signal (Scw) if the monitored voltage falls below a threshold value (Vth) when the charging control device (5) is in off state, **characterized in that** when the activation control device (7) generates the first control signal (Scw), the charging control device (5) is activated, generating to the charging equipment (2) through the communication device (19) a second control signal (Secw) that is indicative of a need that the charging equipment (2) should supply power to the motor-driven vehicle (1) and causing the charger (4) to start operation of the charger (4).

5. The motor-driven vehicle (1) according to claim 4, wherein the battery (3) includes a plurality of battery cells (16-1 through 16-n) that are connected with each other in series, **characterized in that** the voltage detecting device (6) monitors the voltage of the battery (3) in such a way as to monitor voltages (V1 through Vn) of the battery cells (16-1 through 16-n) individually, wherein the activation control device (7) generates the first control signal (Scw) if at least one of the voltages (V1 through Vn) of the battery cells (16-1 through 16-n) falls below a threshold value (Vth) when the charging control device (5) is in off state.

6. The motor-driven vehicle (1) according to claim 5, **characterized in that** the motor-driven vehicle (1) includes a cell balancing device (6) that equalizes the voltages (V1 through Vn) of the battery cells (16-1 through 16-n).
